Europäisches Patentamt

European Patent Office

Office européen des brevets

(19)

(11) Publication number: **0 397 895**
**A1**

(12) **EUROPEAN PATENT APPLICATION**

(21) Application number: 89108669.6

(51) Int. Cl.5: **G02B 6/12**

(22) Date of filing: **13.05.89**

(43) Date of publication of application:
**22.11.90 Bulletin 90/47**

(84) Designated Contracting States:
**DE FR GB NL SE**

(71) Applicant: **SELENIA INDUSTRIE
ELETTRONICHE ASSOCIATE S.p.A.
Via Tiburtina, KM 12.400
I-00131 Roma(IT)**

(72) Inventor: **Varasi, Mauro
Via Giordani 60
I-00159 Roma(IT)**
Inventor: **Misiano, Carlo
Via Morgagni 22
I-00161 Roma(IT)**
Inventor: **Vannucci, Antonello
Via G. Pacini 21
I-00198 Roma(IT)**

(74) Representative: **Gustorf, Gerhard, Dipl.-Ing.
Patentanwalt Dipl.-Ing. Gerhard Gustorf
Bachstrasse 6 A
D-8300 Landshut(DE)**

(54) **Method for the fabrication of LiNbO3 single mode planar optical guide lenses.**

(57) The invention takes regard for an innovative fabrication method of planar optical guide lenses, obtained by proton exchange in various cuts of $LiNbO_3$.

It pertains to the integrated optics technological field for the manufacturing of devices for real time processing of wide band RF signals. The process consists of thermal treatment followed by exchange of protons, in a diluted solution which serves to alter the refraction index of the guided mode in a controlled manner.

Such alteration, which is obtained through thin film masking, provides geometries and reticulations for the manufacturing of lenses and of other planar integrated optical components.

The invention regards a new method for the fabrication of lenses and of other optical components in planar optical waveguides obtained in various cuts of LiNbO₃. The invention belongs to the optical-integrated field of technologies for the manufacturing of devices for real time optical processing of wide band RF signals. The lenses and the entire optical components, are basic elements for the manufacturing of integrated planar optical devices.

As for classic 3 dimensional optical geometry, for integrated optics the means to implement optical components are closely connected to the availability of materials or technologies which make possible the variation of the refraction index along the optical radiation path.

A number of techniques have been developed to alter the guided mode of the refraction index but problems have arisen in the case of waveguides obtained by proton ($Li^+$-$H^+$) exchange from Benzoic Acid, even when diluted with Lithium Benzoate due to their insufficient thermal stability.

The invention which is covered by this patent application, makes possible the alteration of the effective index of the guided modes in waveguides obtained by single - and multi -mode proton exchange.

The new process consists of two phases:
- thermal treatment, at a temperature in excess of 300°C in presence of an oxygen flow;
- second proton exchange due to diluted solution at a temperature lower than 230° C through a thin film aluminium template.

The first phase stabilizes the $Li^+$-$H^-$ interdiffusion profile within the crystal This high temperature stabilization makes it possible to subject the crystal to lower temperature processes without causing alterations to the waveguide refraction index profile. Therfore the second proton exchange may be performed by the sole overlay of a new exchange profile into the previous one, without altering the latter in the areas masked by a thin film of aluminum.

The thermal treatment reduces the refraction index within the waveguides, thereupon, the insertion of protons during the second exchange, once again increases the refraction index and therefore also the mode index, resulting in the alteration required for optical component manufacturing.

The invention will be described with the aim to illustrate the process, without posing any limitations to its scope, with reference to the figures attached:

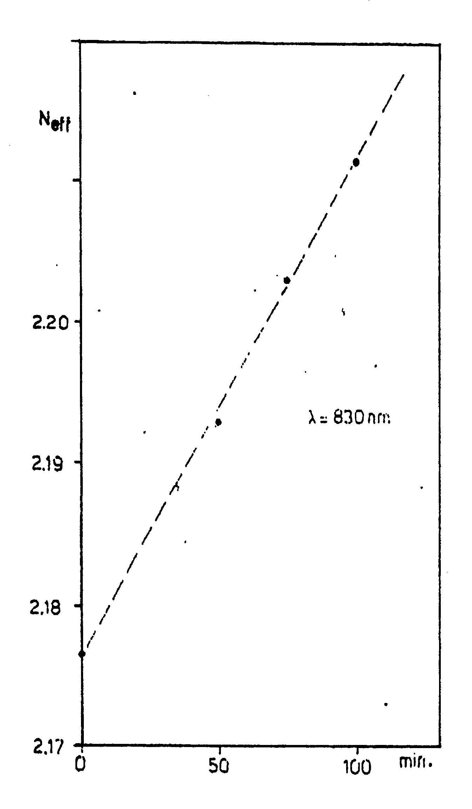

Figure 1 shows the effective refraction index variation as a function of the duration of the second proton exchange in a single-mode guide obtained by proton exchange followed by thermal treatment.

The scope of the invention is that of obtaining guided modes effective refraction index variations, within guides obtained by proton exchange process in LiNbO₃ crystals. Such variations are required to obtain lenses in planar guides. The lenses may be obtained by adopting the double exchange process by means of a suitable aluminium thin film template, on which the planar geometry of the lens has been obtained by etching processes through a photolithographic photopolymer (photoresist)

The first phase of the process, which is the subject of this invention, consists of a thermal treatment of the guide obtained by $H^+$-$Li^+$ proton exchange within the LiNbO₃ crystal. This treatment carried out at 400° C in presence of an Oxygen flow and lasts for a time which is a function of the type of resulting waveguide required. In fact this thermal treatment has the effect of stimulating the $H^+$ and $Li^+$ interdiffusion, therefore modifying the guide refraction index profile, initially step-shaped, thereafter changing into a diffusion profile.

As a result of the thermal treatment, we obtain thermal stability of the guides which is sufficient to make it insentive to the treatment of the second phase of the process.

The second phase consists of a second proton exchange with the following parameters:
- composition of the melt:
$C_6H_5CO_2H$ + (1% Molar) $C_6H_5CO_2Li$
Benzoic Acid Lithium Benzoate
- temperature of the melt: 210°C ± 2° C.

The exchange duration is variable and it depends upon the desired variation of the guided mode effective refraction index. Figure 1 shows an example of the relationship between the second exchange duration and the resulting index variation. The graph refers to a single mode guide on Y cut obtained by means of a first proton exchange (210°C, 1% Lithium Benzoate in Benzoic Acid) for 30 minutes followed by thermal treatment at 400° C in O₂ flow.

The main characteristics of the process are:
- linearity of the relationship between second exchange duration and index variation (within the variation interval useful for the manufacturing of interferential optical components),
- additivity.

This characteristic consists in the possibility of obtaining identical values for index variation by adding a number of separate 2nd exchange phases keeping the sum of each phase times constant. This characteristic is most useful to obtain the required index variation as possible erroneous values may be corrected.

## Claims

1. Process for the fabrication of LiNbO₃ planar optical guides, obtained by means of proton exchange technique, characterized by the fact that it makes use of a thermal treatment for $Li^+$-$H^+$ interdiffusion stabilization of the guide and by a following second proton exchange obtained by means of an Aluminium thin film template.

2. Process for the fabrication of $LiNbO_3$ planar optical guides, obtained by proton exchange technique as per claim 1, where the process parameters have, preferably, the following values:
- thermal treatment temperature: 400° C,
- percentage of Lithium Benzoate in the Benzoic Acid for proton exchange: 1% molar;
- temperature of the proton exchange vat: 210°C;
the above assures variations of the refraction index of the guided mode as a function of the second exchange duration.

$N_{eff}$

$\lambda = 830\,nm$

2.20

2.19

2.18

2.17

0          50          100     min.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | GB-A-2 215 855  (THE PLESSEY CO., INC.)<br>* Whole document *<br>--- | 1,2 | G 02 B    6/12 |
| A | JOURNAL OF LIGHTWAVE TECHNOLOGY, vol. LT-4, no. 7, July 1986, pages 743-745, IEEE, New York, US; M. DE MICHELI et al.: "Crystalline and optical quality of proton exchanged waveguides"<br>* Whole document *<br>--- | 1,2 | |
| A | US-A-4 547 262  (W. SPILLMAN, Jr. et al.)<br>* Whole document *<br>----- | 1,2 | |

TECHNICAL FIELDS SEARCHED (Int. Cl.5)

G 02 B    6/00

The present search report has been drawn up for all claims

| Place of search | Date of completion of the search | Examiner |
|---|---|---|
| THE HAGUE | 17-01-1990 | SARNEEL A.P.T. |